# EUROPEAN PATENT APPLICATION

(11) **EP 4 772 955 A1**
(43) Date of publication of application: **08.07.2026**
(21) Application number: 25869663.2
(22) Date of filing: 27.04.2025
(51) Int. Cl.: G05D 9/12

(54) **ANTI-OVERFLOW CONTROL METHOD FOR DISPENSER, CONTROLLER, DISPENSER, AND STORAGE MEDIUM**

(30) Priority: 25.09.2024 CN 202411347587
(71) Applicant: Hefei Midea Refrigerator Co., Ltd., Hefei, Anhui 230088 (CN); Hefei Hualing Co., Ltd., Hefei, Anhui 230601 (CN); Midea Group Co., Ltd., Foshan, Guangdong 528311 (CN)
(72) Inventor: HUANG, Fanbin, Hefei, Anhui 230088 (CN); WU, Jirong, Hefei, Anhui 230088 (CN); HU, Daquan, Hefei, Anhui 230088 (CN); LIU, Dongxian, Hefei, Anhui 230088 (CN); LIU, Chuanlan, Hefei, Anhui 230088 (CN); ZENG, Zhenjie, Hefei, Anhui 230088 (CN)
(74) Representative: Ran, Handong
(86) International application number: PCT/CN2025/091484
(87) International publication number: WO 2026/066063

(57) **Abstract**

Embodiments of the present disclosure propose an overflow prevention control method for a dispenser, a controller, a dispenser, and a storage medium. The dispenser is arranged with an ingredient outlet and a water tank, and the water tank is arranged with a level sensor. The overflow prevention control method according to the embodiments of the present disclosure comprises: detecting, by the level sensor, a first liquid level height of the water tank (S210); and, according to the first liquid level height, enabling a target filling mode and a target overflow protection, wherein the target filling mode is an automatic filling mode and/or a manual filling mode, and the target overflow protection is an automatic filling overflow protection and/or a manual filling overflow protection (S220)

## Description

### CROSS-REFERENCE TO RELATED APPLICATIONS

The present application claims priority to Chinese Patent Application No. 202411347587.3 filed on September 25, 2024, entitled "Overflow Prevention Control Method for Dispenser, Controller, Dispenser, and Storage Medium", the entire contents of which are incorporated herein by reference.

### TECHNICAL FIELD

The present disclosure relates to the technical field of dispensers, and in particular, to an overflow prevention control method for a dispenser, a controller, a dispenser, and a storage medium.

### BACKGROUND

In the related art, the overflow protection currently adopted by dispensers is to stop filling when it is detected that the liquid level in a container has not changed for a certain period of time. However, in actual use, the phenomenon of filling material overflow occurs due to some special scenarios.

### SUMMARY OF THE DISCLOSURE

The present disclosure aims to solve at least one of the technical problems existing in the related art. For this purpose, the present disclosure proposes an overflow prevention control method for a dispenser, a controller, a dispenser, and a storage medium, aiming to achieve overflow prevention control and reduce the occurrence of water overflowing onto the ground.

In a first aspect, some embodiments of the present disclosure provide an overflow prevention control method for a dispenser. The dispenser is arranged with an ingredient outlet and a water tank; an upper part of the water tank is configured to place a container, the ingredient outlet is configured to fill the container with an ingredient, and the water tank is configured to receive the ingredient overflowing from the container; the water tank is arranged with a level sensor. The method includes:
detecting, via the level sensor, a first liquid level height of the water tank; and
enabling a target filling mode and a target overflow protection according to the first liquid level height; wherein the target filling mode is at least one of an automatic filling mode or a manual filling mode, and the target overflow protection is at least one of an automatic filling overflow protection or a manual filling overflow protection.

In some embodiments, the enabling a target filling mode and a target overflow protection according to the first liquid level height comprises:
in a case where the first liquid level height of the water tank is less than a preset height, enabling the automatic filling mode and the manual filling mode, and enabling the automatic filling overflow protection and the manual filling overflow protection; and
in a case where the first liquid level height of the water tank is greater than or equal to the preset height, disabling the automatic filling mode and the manual filling mode.

In some embodiments, the enabling a target filling mode and a target overflow protection according to the first liquid level height comprises:
in a case where the first liquid level height of the water tank is less than a preset height, enabling the automatic filling mode and the manual filling mode, and enabling the automatic filling overflow protection and the manual filling overflow protection; and
in a case where the first liquid level height of the water tank is greater than or equal to the preset height, enabling the automatic filling mode and the manual filling mode, and enabling the automatic filling overflow protection and the manual filling overflow protection.

In some embodiments, the enabling a target filling mode and a target overflow protection according to the first liquid level height comprises:
in a case where the first liquid level height of the water tank is less than a preset height, enabling the automatic filling mode and the manual filling mode, and enabling the automatic filling overflow protection and the manual filling overflow protection; and
in a case where the first liquid level height of the water tank is greater than or equal to the preset height, enabling the automatic filling mode and the manual filling mode, and enabling the automatic filling overflow protection and the manual filling overflow protection.

In some embodiments, the enabling a target filling mode and a target overflow protection according to the first liquid level height comprises:
in a case where the first liquid level height of the water tank is less than a preset height, enabling the automatic filling mode and the manual filling mode, and enabling the automatic filling overflow protection and the manual filling overflow protection; and
in a case where the first liquid level height of the water tank is greater than or equal to the preset height, enabling the manual filling mode and disabling the automatic filling mode, and enabling the manual filling overflow protection.

In some embodiments, in a case that the first liquid level height of the water tank is less than the preset height, the method further comprises:
receiving a filling instruction, and controlling, according to the filling instruction, the ingredient outlet to fill the container with the ingredient;
detecting, via the level sensor, a real-time liquid level height of the water tank; and

in a case where the real-time liquid level height reaches the preset height, controlling the ingredient outlet to stop filling the container with the ingredient. In some embodiments, the dispenser is arranged with an automatic filling sensor; the dispenser is configured to execute the automatic filling mode by operations as follows:
in a case where the automatic filling sensor detects that the container is placed below the ingredient outlet, responsively generating an automatic filling instruction; and
controlling, via the automatic filling instruction, the ingredient outlet to fill the container with the ingredient.

In some embodiments, the dispenser is arranged with a manual filling trigger device; the dispenser is configured to execute the manual filling mode by operations as follows:
receiving, via the manual filling trigger device, a manual filling instruction triggered by a user; and
controlling, according to the manual filling instruction, the ingredient outlet to fill the container with the ingredient.

In some embodiments, in a case of controlling, via the automatic filling instruction, the ingredient outlet to fill the container with the ingredient, operations of the automatic filling overflow protection comprise at least one of the following:
detecting, by the automatic filling sensor, a second liquid level height in the container; and in a case where the second liquid level height reaches a preset filling height, controlling the ingredient outlet to stop filling the container with the ingredient;
in a case where the automatic filling sensor detects that the container is not placed below the ingredient outlet, controlling the ingredient outlet to stop filling the container with the ingredient; and
detecting, via the automatic filling sensor, the second liquid level height in the container; and in a case where the second liquid level height remains unchanged within a preset time period, controlling the ingredient outlet to stop filling the container with the ingredient.

In some embodiments, in a case of controlling, via the automatic filling instruction, the ingredient outlet to fill the container with the ingredient, the method further comprises at least one of the following:
in a case where the first liquid level height of the water tank is greater than or equal to the preset height, pushing an abnormal prompt message to the user;
in a case where it is detected that the container is not placed below the ingredient outlet, pushing an abnormal prompt message to the user; and
in a case where the second liquid level height in the container remains unchanged within the preset time period, pushing an abnormal prompt message to the user.

In some embodiments, in a case of controlling, according to the manual filling instruction, the ingredient outlet to fill the container with the ingredient, operations of the manual filling overflow protection comprise at least one of the following:
receiving a user stop signal, and controlling, according to the user stop signal, the ingredient outlet to stop filling the container with the ingredient; and
acquiring a manual filling time, and in a case where the manual filling time reaches a preset time, controlling the ingredient outlet to stop filling the container with the ingredient.

In some embodiments, in a case of controlling, according to the manual filling instruction, the ingredient outlet to fill the container with the ingredient, the method further comprises at least one of the following:
in a case where the first liquid level height of the water tank is greater than or equal to the preset height, pushing an abnormal prompt message to the user; and
in a case where the manual filling time reaches the preset time, pushing an abnormal prompt message to the user.

In a second aspect, some embodiments of the present disclosure provide a controller, comprising a memory, a processor, and a computer program stored on the memory and executable on the processor, wherein the processor, when running the computer program, executes the overflow prevention control method for a dispenser according to the first aspect.

In a third aspect, some embodiments of the present disclosure provide a dispenser, comprising the controller according to the second aspect.

In a fourth aspect, some embodiments of the present disclosure provide a computer-readable storage medium, storing computer-executable instructions, wherein the computer-executable instructions are for executing the overflow prevention control method for a dispenser according to the first aspect.

In a fifth aspect, some embodiments of the present disclosure provide a computer program product, comprising a computer program or computer instructions, wherein the computer program or the computer instructions are stored in a computer-readable storage medium, a processor of a computer device reads the computer program or the computer instructions from the computer-readable storage medium, and the processor executes the computer program or the computer instructions, causing the computer device to execute the overflow prevention control method for a dispenser according to the first aspect.

According to the technical solutions of the embodiments of the present disclosure, at least the following beneficial effects are achieved: Firstly, the dispenser is arranged with an ingredient outlet and a water tank. An upper part of the water tank is for placing a container. The ingredient outlet is for filling the container with an ingredient. The water tank is for receiving the ingredient overflowing from the container. The water tank is arranged with a level sensor. Then, a first liquid level height of the water tank is detected by the level sensor. A target filling mode and a target overflow protection are enabled according to the first liquid level height, where the target filling mode is an automatic filling mode and/or a manual filling mode, and the target overflow protection is an automatic filling overflow protection and/or a manual filling overflow protection. The embodiments of the present disclosure provide a level sensor on the water tank. The liquid level height of the water tank can be detected via the level sensor, thereby determining the liquid level status of the water tank. Moreover, the target filling mode and the target overflow protection can be set according to the liquid level status of the water tank, thereby providing a method capable of implementing overflow prevention control, thus reducing the occurrence of water overflowing onto the ground. Simultaneously, it avoids the situation where the user cannot get water when the overflow water tank is full, improving the user experience.

Additional aspects and advantages of the present disclosure will be partially given in the following description, and partially will become apparent from the following description, or understood through the practice of the present disclosure.

### BRIEF DESCRIPTION OF THE DRAWINGS

The accompanying drawings are provided for further understanding of the technical solutions of the present disclosure, constitute a part of the description, and are used together with the embodiments of the present disclosure to explain the technical solutions of the present disclosure, and do not constitute a limitation on the technical solutions of the present disclosure.
FIG. 1 is a schematic structural diagram of a dispenser according to some embodiments of the present disclosure.
FIG. 2 is a flowchart of an overflow prevention control method for a dispenser according to some embodiments of the present disclosure.
FIG. 3 is a flowchart of an overflow prevention control method for a dispenser according to other embodiments of the present disclosure.
FIG. 4 is a flowchart of an overflow prevention control method for a dispenser according to further other embodiments of the present disclosure.
FIG. 5 is a flowchart of an overflow prevention control method for a dispenser according to still other embodiments of the present disclosure.
FIG. 6 is a flowchart of an overflow prevention control method for a dispenser according to yet other embodiments of the present disclosure.
FIG. 7 is a flowchart of an overflow prevention control method for a dispenser according to yet other embodiments of the present disclosure.
FIG. 8 is a flowchart of an overflow prevention control method for a dispenser according to yet other embodiments of the present disclosure.
FIG. 9 is a flowchart of an overflow prevention control method for a dispenser according to yet other embodiments of the present disclosure.
FIG. 10 is a flowchart of an overflow prevention control method for a dispenser according to yet other embodiments of the present disclosure.
FIG. 11 is a logic diagram of an overflow prevention control method for a dispenser according to some embodiments of the present disclosure.
FIG. 12 is a logic diagram of an overflow prevention control method for a dispenser according to other embodiments of the present disclosure.
FIG. 13 is a logic diagram of an overflow prevention control method for a dispenser according to further other embodiments of the present disclosure.
FIG. 14 is a logic diagram of an overflow prevention control method for a dispenser according to still other embodiments of the present disclosure.
FIG. 15 is a logic diagram of an overflow prevention control method for a dispenser according to yet other embodiments of the present disclosure.
FIG. 16 is a logic diagram of an overflow prevention control method for a dispenser according to yet other embodiments of the present disclosure.
FIG. 17 is a schematic diagram of a controller for executing an overflow prevention control method for a dispenser according to some embodiments of the present disclosure.

### DETAILED DESCRIPTION

The embodiments of the present disclosure are described in detail below. Examples of the embodiments are illustrated in the accompanying drawings, where the same or similar reference numerals refer to the same or similar elements or elements having the same or similar functions throughout. The embodiments described below with reference to the drawings are exemplary and are intended to explain the present disclosure, and should not be construed as limiting the present disclosure.

In the description of the present disclosure, it should be understood that terms indicating orientations or positional relationships, such as "upper", "lower", "front", "rear", "left", "right", etc., are based on the orientations or positional relationships shown in the drawings, and are only for the convenience of describing the present disclosure and simplifying the description, rather than indicating or implying that the referred apparatus or element must have a specific orientation, be constructed and operated in a specific orientation. Therefore, they should not be construed as limitations on the present disclosure.

In the description of the present disclosure, "several" means one or more, and "a plurality" means two or more. "Greater than", "less than", "exceeding", etc. are understood to exclude the number itself, while "above", "below", "within", etc. are understood to include the number itself. When "first", "second", etc. are described, they are only for the purpose of distinguishing technical features, and should not be understood as indicating or implying relative importance or implicitly indicating the number of the indicated technical features or the order of the indicated technical features.

In the description of the present disclosure, unless otherwise clearly defined, terms such as "dispose", "install", "connect", etc. should be understood in a broad sense. Those skilled in the art can reasonably determine the specific meanings of the above terms in the present disclosure in combination with the specific contents of the technical solutions.

In some situations, in the related art, the overflow protection currently adopted by a dispenser is to automatically stop water supply when a sensor detects that the liquid level in a cup has not changed for 8 seconds to 12 seconds. However, when filling the cup with water, some special scenarios (such as placing a spoon or straw in the cup, the cup being placed off-center, etc.) may cause water to overflow from the water tank onto the ground (the response time of 8 seconds to 12 seconds may cause the water tank to be filled, and water to overflow from the water tank onto the ground). Therefore, existing dispensers lack corresponding overflow prevention control, and it is prone to the phenomenon of water overflowing onto the ground due to some abnormal situations, thereby affecting the user experience.

Based on the above situation, the embodiments of the present disclosure propose an overflow prevention control method for a dispenser, a controller, a dispenser, and a storage medium, aiming to reduce the occurrence of water overflowing onto the ground, and in addition, avoid situations where the user cannot get water when the overflow water tank is full, thereby improving the user experience.

Hereinafter, various embodiments of the dispenser of the present disclosure are further described in conjunction with the accompanying drawings.

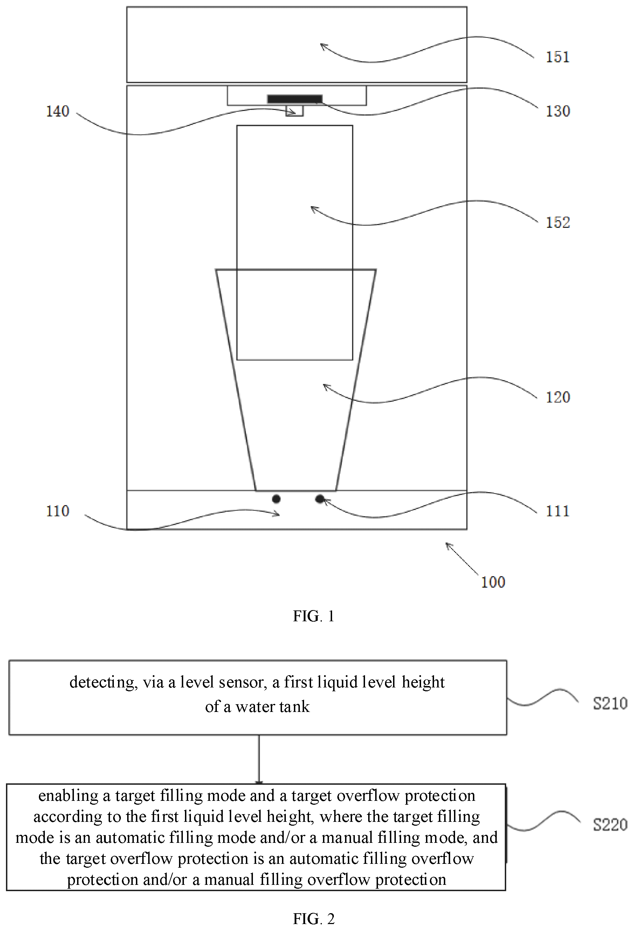

As shown in FIG. 1, FIG. 1 is a schematic structural diagram of a dispenser according to some embodiments of the present disclosure.

In some embodiments, a dispenser 100 includes a water tank 110, a container 120, an automatic filling sensor 130, an ingredient outlet 140, and a manual filling trigger device. The water tank 110 includes a level sensor 111 as shown in FIG. 1. The level sensor 111 is disposed on a top position of the water tank 110. The container 120 is disposed above the water tank 110. The manual filling trigger device is disposed on a top of the dispenser 100 and/or above the container 120. The automatic filling sensor 130 is connected to the ingredient outlet 140 and is disposed above the ingredient outlet 140.

In some embodiments, the dispenser 100 may include multiple manual filling trigger devices. By controlling the manual filling trigger device, the ingredient outlet 140 can be controlled.

In some embodiments, the manual filling trigger device includes a panel 151 and a water spout 152 as shown in FIG. 1. A signal input by a user can be obtained via the panel 151 or the water spout 152. The user can trigger filling by touching a position on the panel 151, or select a quantitative specification on the panel 151 to output a fixed amount of ingredient.

In some embodiments, the automatic filling sensor 130 is configured to detect a height of the container 120, and may further detect a height of filled material, thereby setting corresponding overflow prevention control in the dispenser to reduce the phenomenon of water overflowing onto the ground due to some abnormal situations.

In some embodiments, types of the automatic filling sensor 130 include, but are not limited to, image sensors, laser Time-of-Flight (TOF) sensors, ultrasonic TOF sensors, ultrasonic sensors, and capacitive sensors. Some sensors are illustrated below.

For image sensors, an image sensor includes multiple photosensitive elements (pixels). Each pixel generates a corresponding charge when receiving light. These charges are subsequently converted into voltage signals and converted into digital signals via an analog-to-digital converter. The digital signals can then be further processed, such as compression, color correction, etc., to ultimately form storable or transmittable images.

For laser Time of Flight (TOF) sensors, the laser TOF sensor is a device that uses the principle of time of flight to measure distance and speed. TOF technology determines the distance by emitting a laser pulse and measuring the time required for the light pulse to be reflected back from the target object. First, the sensor emits a short laser pulse; then, the laser pulse is reflected back when encountering the object; then, the sensor receives the reflected light pulse; then, the time difference between the emission and reception of the light pulse is measured; finally, the distance to the object is calculated using the speed of light and the time difference.

For ultrasonic TOF sensors, the ultrasonic TOF sensor is a sensor that uses the time of flight of ultrasonic waves to measure distance. Similar to laser TOF sensors, ultrasonic TOF sensors determine the distance by measuring the time required for the emitted acoustic wave pulse to be reflected back from the target object. First, the sensor emits a short ultrasonic pulse; then, the ultrasonic pulse is reflected back when encountering the object; then, the sensor receives the reflected acoustic wave pulse; then, the time difference between the emission and reception of the acoustic wave pulse is measured; finally, the distance to the object is calculated using the speed of sound (usually known in air) and the time difference.

In some embodiments, types of the level sensor 111 include, but are not limited to, electrode-type level sensors, capacitive level sensors, and float-type level sensors.

Based on the hardware structures of the dispenser in the above various embodiments, various embodiments of the overflow prevention control method for the dispenser of the present disclosure are proposed below.

As shown in FIG. 2, FIG. 2 is a flowchart of an overflow prevention control method for a dispenser according to some embodiments of the present disclosure. The overflow prevention control method for the dispenser may include, but is not limited to, operations S210 and S220 at blocks illustrated herein.

At block S210: detecting, via a level sensor, a first liquid level height of a water tank.

At block S220: enabling a target filling mode and a target overflow protection according to the first liquid level height, where the target filling mode is an automatic filling mode and/or a manual filling mode, and the target overflow protection is an automatic filling overflow protection and/or a manual filling overflow protection.

In some embodiments, first, the level sensor of the dispenser detects the first liquid level height of the water tank. When the user needs to fill the container, a controller of the dispenser enables the automatic filling mode and/or the manual filling mode according to the first liquid level height. The user may fill the container by selecting the control panel or the water spout, or may place the container under the ingredient outlet to allow the automatic filling sensor to sense and perform filling. After the user performs the operation of filling the container, the dispenser enables the automatic filling overflow protection and/or the manual filling overflow protection according to the first liquid level height of the water tank. The embodiments of the present disclosure provide a level sensor on the water tank. The liquid level height of the water tank can be detected via the level sensor, thereby determining the liquid level status of the water tank. Moreover, the target filling mode and the target overflow protection can be set according to the liquid level status of the water tank, thereby providing a method capable of implementing overflow prevention control, reducing the occurrence of water overflowing onto the ground, and thus, avoiding the situation where the user cannot get water when the overflow water tank is full, so as to improve the user experience.

It should be noted that regarding the level sensor provided on the water tank, the position of the level sensor is set at any position on the top of the water tank, which may be set according to actual situations, such that the detected first liquid level height is more accurate. This not only better ensures the normal operation of the system, but also enables the dispenser to timely enable the target filling mode and the target overflow protection.

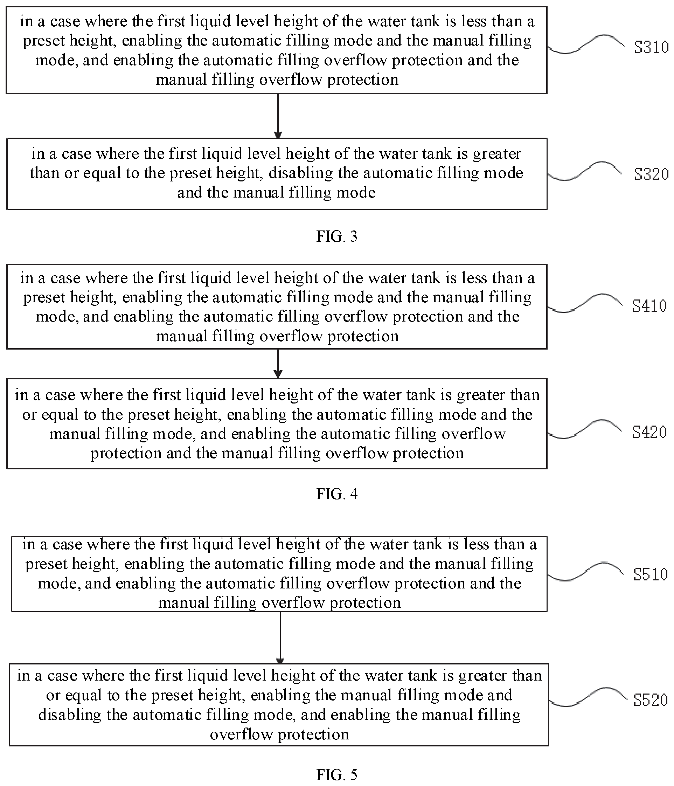

In addition, as shown in FIG. 3, FIG. 3 is a flowchart of an overflow prevention control method for a dispenser according to other embodiments of the present disclosure. Regarding the enabling a target filling mode and a target overflow protection according to the first liquid level height in the S220, it may include, but is not limited to, operations S310 and S320 at blocks illustrated herein.

At block S310: in a case where the first liquid level height of the water tank is less than a preset height, enabling the automatic filling mode and the manual filling mode, and enabling the automatic filling overflow protection and the manual filling overflow protection.

At block S320: in a case where the first liquid level height of the water tank is greater than or equal to the preset height, disabling the automatic filling mode and the manual filling mode.

In some embodiments, when the first liquid level height of the water tank is less than the preset height, the use of the automatic filling mode and the manual filling mode to fill the container with the ingredient via the ingredient outlet is allowed, and correspondingly, the automatic filling overflow protection and the manual filling overflow protection are enabled. When the first liquid level height of the water tank is greater than or equal to the preset height, the use of the automatic filling mode and the manual filling mode to fill the container with the ingredient via the ingredient outlet is not allowed.

It is understandable that regarding the preset height, it may be preset by the user or the system. The user or the system may set the value of the preset height, which may be within a sensing range of the level sensor. The value of the preset height is not specifically limited in the embodiments of the present disclosure.

In addition, as shown in FIG. 4, FIG. 4 is a flowchart of an overflow prevention control method for a dispenser according to further other embodiments of the present disclosure. Regarding the enabling a target filling mode and a target overflow protection according to the first liquid level height in the S220, it may include, but is not limited to, operations S410 and S420 at blocks illustrated herein.

At block S410: in a case where the first liquid level height of the water tank is less than a preset height, enabling the automatic filling mode and the manual filling mode, and enabling the automatic filling overflow protection and the manual filling overflow protection.

At block S420: in a case where the first liquid level height of the water tank is greater than or equal to the preset height, enabling the automatic filling mode and the manual filling mode, and enabling the automatic filling overflow protection and the manual filling overflow protection.

In some embodiments, when the first liquid level height of the water tank is less than the preset height, the use of the automatic filling mode and the manual filling mode to fill the container with the ingredient via the ingredient outlet is allowed, and correspondingly, the automatic filling overflow protection and the manual filling overflow protection are enabled. When the first liquid level height of the water tank is greater than or equal to the preset height, the use of the automatic filling mode and the manual filling mode to fill the container with the ingredient via the ingredient outlet is allowed, and correspondingly, the automatic filling overflow protection and the manual filling overflow protection are enabled, thereby avoiding the situation where the user cannot get water when the overflow water tank is full, and improving the user experience.

In addition, as shown in FIG. 5, FIG. 5 is a flowchart of an overflow prevention control method for a dispenser according to still other embodiments of the present disclosure. Regarding the enabling a target filling mode and a target overflow protection according to the first liquid level height in the S220, it may include, but is not limited to, operations S510 and S520 at blocks illustrated herein.

At block S510: in a case where the first liquid level height of the water tank is less than a preset height, enabling the automatic filling mode and the manual filling mode, and enabling the automatic filling overflow protection and the manual filling overflow protection.

At block S520: in a case where the first liquid level height of the water tank is greater than or equal to the preset height, enabling the manual filling mode and disabling the automatic filling mode, and enabling the manual filling overflow protection.

In some embodiments, when the first liquid level height of the water tank is less than the preset height, the use of the automatic filling mode and the manual filling mode to fill the container with the ingredient via the ingredient outlet is allowed, and correspondingly, the automatic filling overflow protection and the manual filling overflow protection are enabled. When the first liquid level height of the water tank is greater than or equal to the preset height, the use of the automatic filling mode to fill the container with the ingredient via the ingredient outlet is not allowed, the use of the manual filling mode to fill the container with the ingredient is allowed, and correspondingly, the automatic filling overflow protection is enabled.

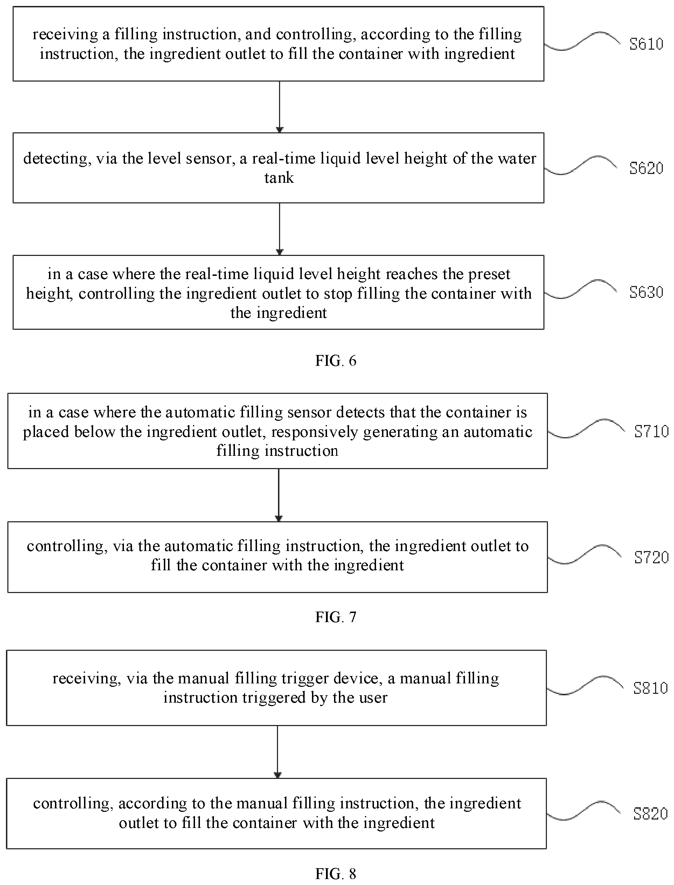

In addition, as shown in FIG. 6, FIG. 6 is a flowchart of an overflow prevention control method for a dispenser according to yet other embodiments of the present disclosure. Regarding the case where the first liquid level height of the water tank is less than the preset height in the operations S410 or S510, it may include, but is not limited to, operations S610, S620, and S630 at blocks illustrated herein.

At block S610: receiving a filling instruction, and controlling, according to the filling instruction, the ingredient outlet to fill the container with ingredient.

At block S620: detecting, via the level sensor, a real-time liquid level height of the water tank.

At block S630: in a case where the real-time liquid level height reaches the preset height, controlling the ingredient outlet to stop filling the container with the ingredient.

In some embodiments, during the process of automatic filling or manual filling, when a state change occurs from the first liquid level height of the water tank being less than the preset height to the first liquid level height of the water tank being greater than or equal to the preset height, the automatic filling sensor stops responding and the ingredient outlet stops outputting the ingredient.

In addition, as shown in FIG. 7, FIG. 7 is a flowchart of an overflow prevention control method for a dispenser according to yet other embodiments of the present disclosure. Operations for the dispenser to execute the automatic filling mode may include, but are not limited to, operations S710 and S720 at blocks illustrated herein.

At block S710: in a case where the automatic filling sensor detects that the container is placed below the ingredient outlet, responsively generating an automatic filling instruction.

At block S720: controlling, via the automatic filling instruction, the ingredient outlet to fill the container with the ingredient.

In some embodiments, the user places the container below the ingredient outlet. When the automatic filling sensor detects that the container is placed below the ingredient outlet, the controller in the dispenser generates an automatic filling instruction. When a processor in the dispenser receives the automatic filling instruction, it controls the ingredient outlet to fill the container with the ingredient.

In addition, as shown in FIG. 8, FIG. 8 is a flowchart of an overflow prevention control method for a dispenser according to yet other embodiments of the present disclosure. Regarding the dispenser being arranged with the manual filling trigger device(s); the dispenser executing the manual filling mode includes, but is not limited to, operations S810 and S820 at blocks illustrated herein.

At block S810: receiving, via the manual filling trigger device, a manual filling instruction triggered by the user.

At block S820: controlling, according to the manual filling instruction, the ingredient outlet to fill the container with the ingredient.

In some embodiments, the manual filling trigger device includes a panel. The user may trigger a filling instruction on the panel. Ways to trigger the filling instruction include, but are not limited to, clicking a button, tapping, and gestures.

In some embodiments, a filling instruction button is arranged on the manual filling trigger device. When filling is required to be executed, the user may click or touch the button to trigger the manual filling instruction. Alternatively, a tap sensing area may be set on the manual filling trigger device. When the user taps the sensing area, the filling instruction can be triggered. Alternatively, a camera may be arranged on the manual filling trigger device, and a gesture for the filling instruction is preset. When it is recognized that the user's gesture is the same as the preset gesture, the filling instruction is triggered.

In some embodiments, quantitative options are set on the panel. The user may select the amount of ingredient he/she needs according to an actual situation. The quantitative options may be an amount input by the user, an amount selected by the user from a range, or a preset quantitative amount selected by the user.

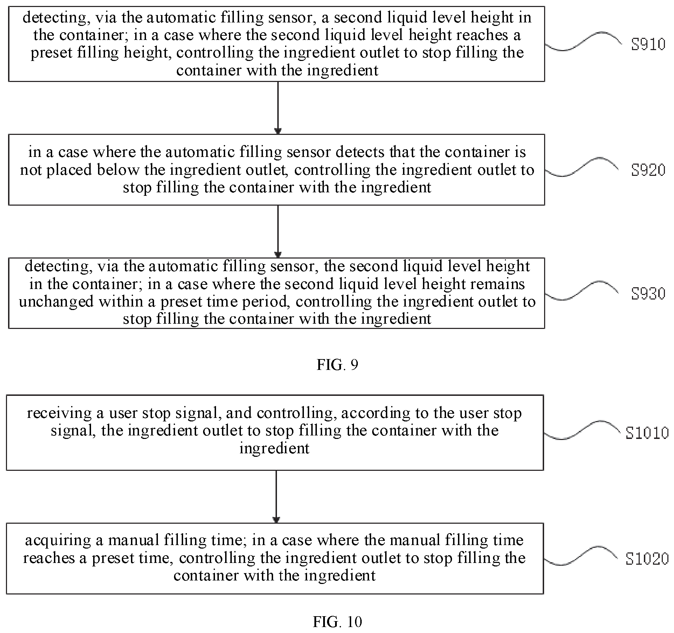

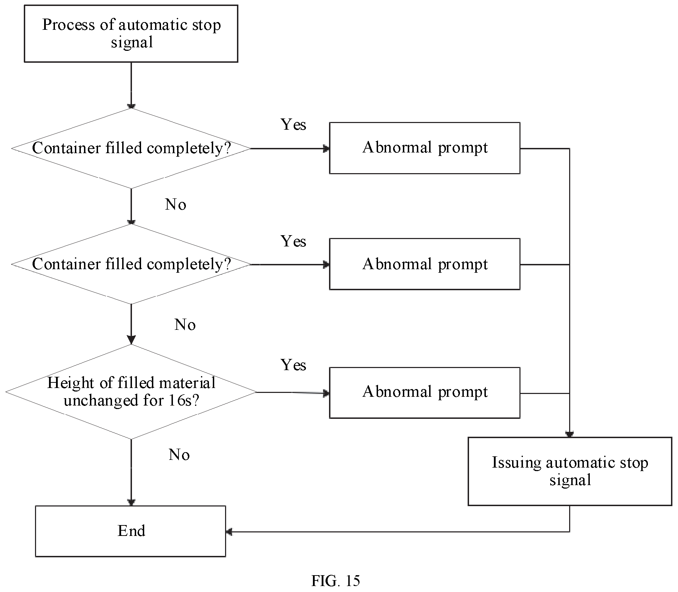

In addition, as shown in FIG. 9, FIG. 9 is a flowchart of an overflow prevention control method for a dispenser according to yet other embodiments of the present disclosure. In a case of controlling, by the automatic filling instruction, the ingredient outlet to fill the container with the ingredient, operations of the automatic filling overflow protection include at least one of the following. As shown in FIG. 15, FIG. 15 is a logic diagram of an overflow prevention control method for a dispenser according to yet other embodiments of the present disclosure.

At block S910: detecting, via the automatic filling sensor, a second liquid level height in the container; in a case where the second liquid level height reaches a preset filling height, controlling the ingredient outlet to stop filling the container with the ingredient.

At block S920: in a case where the automatic filling sensor detects that the container is not placed below the ingredient outlet, controlling the ingredient outlet to stop filling the container with the ingredient.

At block S930: detecting, via the automatic filling sensor, the second liquid level height in the container; in a case where the second liquid level height remains unchanged within a preset time period, controlling the ingredient outlet to stop filling the container with the ingredient.

In some embodiments, as shown in FIGS. 9 and 15, in a case of controlling, by the automatic filling instruction, the ingredient outlet to fill the container with the ingredient, the automatic filling sensor detects the second liquid level height in the container. When the container is completely filled, an automatic stop signal is issued, and then the process ends. When the container is not completely filled, if the container is taken away, an automatic stop signal is issued, and then the process ends. When the container is not taken away and the height of the filled material remains unchanged for 16 seconds, an automatic stop signal is issued, and then the process ends. When the container is not taken away and the height of the filled material changes within 16 seconds, the process ends directly.

In some embodiments, it is determined that the container is completely filled when the second liquid level height equals the height of the container.

In some embodiments, in a case of controlling, by the automatic filling instruction, the ingredient outlet to fill the container with the ingredient, the method further includes at least one of the following:
in a case where the first liquid level height of the water tank is greater than or equal to the preset height, pushing an abnormal prompt message to the user;
in a case where it is detected that the container is not placed below the ingredient outlet, pushing an abnormal prompt message to the user; and
in a case where the second liquid level height in the container remains unchanged within the preset time period, pushing an abnormal prompt message to the user.

It should be noted that the pushing an abnormal prompt message to the user may be achieved via a display panel or a buzzer to push a full-water prompt message to the user.

**In** some embodiments, when the first liquid level height of the water tank is greater than or equal to the preset height, a full-water prompt message may be pushed to the user via a display panel or a buzzer. When the full-water prompt message is pushed to the user via the display panel, the display panel may be designed with a user interface for the full-water prompt. The user interface includes, but is not limited to, text, icons, or animations of the prompt message. Then, a display method for the full-water prompt message is determined. The display method includes, but is not limited to, full-screen display, pop-up window, or status bar notification. For example, when the first liquid level height of the water tank is greater than or equal to the preset height, the display panel displays the text "Water tank level exceeds preset height" in full screen.

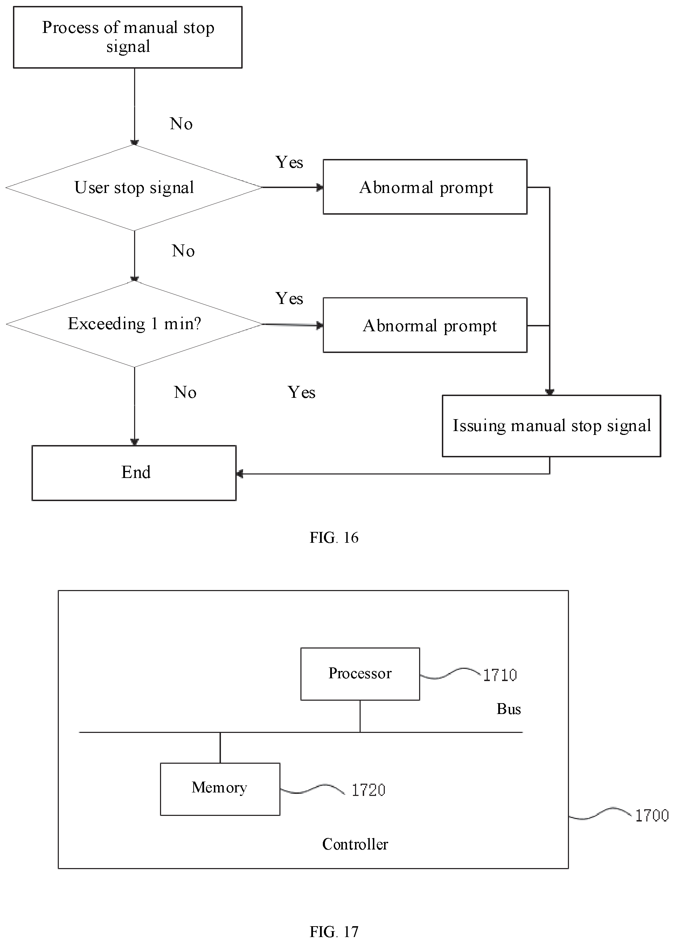

In addition, as shown in FIG. 10, FIG. 10 is a flowchart of an overflow prevention control method for a dispenser according to yet other embodiments of the present disclosure. In a case of controlling, by the manual filling instruction, the ingredient outlet to fill the container with the ingredient, regarding operations of the manual filling overflow protection, it includes, but is not limited to, operations S1010 and S1020 at blocks illustrated herein. As shown in FIG. 16, FIG. 16 is a logic diagram of an overflow prevention control method for a dispenser according to yet other embodiments of the present disclosure.

At block S1010: receiving a user stop signal, and controlling, according to the user stop signal, the ingredient outlet to stop filling the container with the ingredient.

At block S1020: acquiring a manual filling time; in a case where the manual filling time reaches a preset time, controlling the ingredient outlet to stop filling the container with the ingredient.

In some embodiments, as shown in FIGS. 10 and 16, in a case of controlling, by the manual filling instruction, the ingredient outlet to fill the container with the ingredient, when the user inputs a stop signal, a manual stop signal is issued, and then the ingredient outlet is controlled to stop filling the container with the ingredient. When the user does not input a stop signal and the manual filling time reaches the preset time, i.e., exceeds 1 minute, a manual stop signal is issued, and then the ingredient outlet is controlled to stop filling the container with the ingredient. When the user does not input a stop signal and the manual filling time does not reach the preset time, i.e., does not exceed 1 minute, the process of the manual filling instruction ends.

In some embodiments, the filling time is a duration from when the user starts manual filling to when the user ends manual filling. After the user starts manual filling, a timer starts timing. When the user ends manual filling, the timer stops timing and the accumulated time of the timer is cleared. When the user starts manual filling again, the timer restarts timing.

In some embodiments, when the first liquid level height of the water tank is less than the preset height, automatic filling provides overflow protection by stopping water supply when the liquid level does not change for 16 seconds, and manual filling provides overflow protection by stopping water supply when exceeding 1 minute. When the first liquid level height of the water tank is greater than or equal to the preset height, automatic filling provides overflow protection by stopping water supply when the liquid level does not change for 16 seconds or by refusing automatic filling, and manual filling provides overflow protection by stopping water supply when exceeding 1 minute.

In some embodiments, in a case of controlling, by the manual filling instruction, the ingredient outlet to fill the container with the ingredient, the method further includes at least one of the following:
in a case where the first liquid level height of the water tank is greater than or equal to the preset height, pushing an abnormal prompt message to the user; and
in a case where the manual filling time reaches the preset time, pushing an abnormal prompt message to the user.

In a case of controlling, by the manual filling instruction, the ingredient outlet to fill the container with the ingredient, the method further includes at least one of the following:
in a case where the first liquid level height of the water tank is greater than or equal to the preset height, pushing an abnormal prompt message to the user;
in a case where the manual filling time reaches the preset time, pushing an abnormal prompt message to the user.

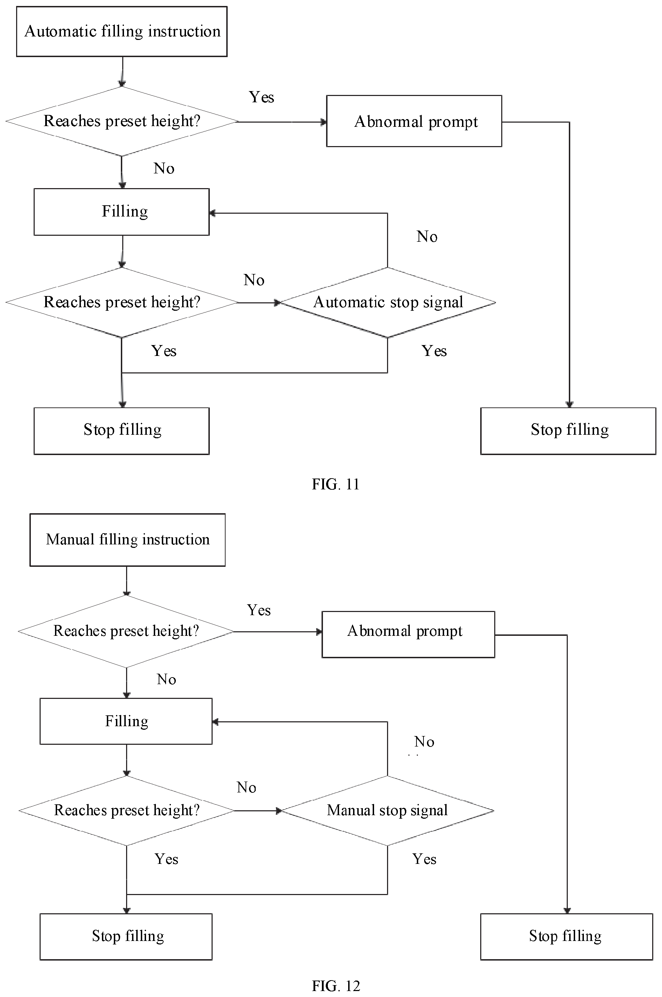

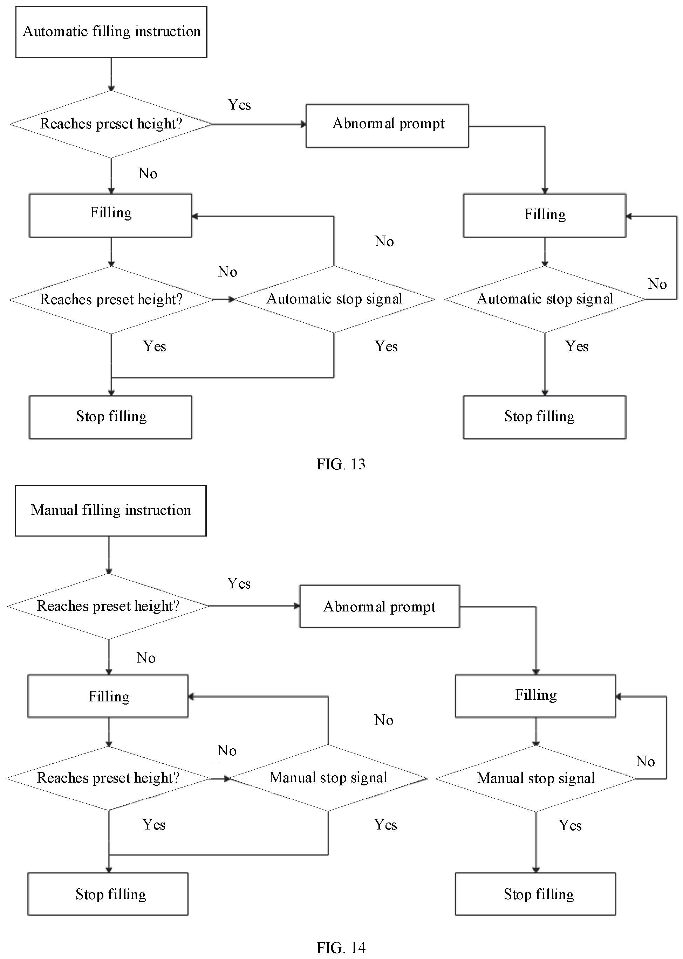

In addition, as shown in FIG. 11, FIG. 11 is a logic diagram of an overflow prevention control method for a dispenser according to some embodiments of the present disclosure. As shown in FIG. 12, FIG. 12 is a logic diagram of an overflow prevention control method for a dispenser according to other embodiments of the present disclosure. As shown in FIG. 13, FIG. 13 is a logic diagram of an overflow prevention control method for a dispenser according to further other embodiments of the present disclosure. As shown in FIG. 14, FIG. 14 is a logic diagram of an overflow prevention control method for a dispenser according to still other embodiments of the present disclosure.

In some embodiments, as shown in FIG. 11, when a filling instruction is received, and the filling instruction is an automatic filling instruction, an initial liquid level height of the water tank is determined. When the initial liquid level height has reached the preset height, filling is stopped, i.e., filling is not allowed. When the initial liquid level height has not reached the preset height, filling is allowed, and the ingredient outlet is controlled to fill the container with the ingredient according to the filling instruction. In addition, during the process of filling the container with the ingredient, the real-time liquid level height of the water tank is detected by the level sensor. When the real-time liquid level height reaches the preset height, an abnormal prompt message is pushed to the user, and the ingredient outlet is controlled to stop filling the container with the ingredient. When the real-time liquid level height has not reached the preset height and an automatic stop signal is obtained, the ingredient outlet is controlled to stop filling the container with the ingredient. When the real-time liquid level height has not reached the preset height and an automatic stop signal is not obtained, the ingredient outlet is controlled to fill the container with the ingredient.

In some embodiments, as shown in FIG. 12, when a filling instruction is received, and the filling instruction is a manual filling instruction, an initial liquid level height of the water tank is determined. When the initial liquid level height has reached the preset height, an abnormal prompt message is pushed to the user, and filling is stopped, i.e., filling is not allowed. When the initial liquid level height has not reached the preset height, filling is allowed, and the ingredient outlet is controlled to fill the container with the ingredient according to the manual filling instruction. In addition, during the process of filling the container with the ingredient, the real-time liquid level height of the water tank is detected by the level sensor. When the real-time liquid level height reaches the preset height, an abnormal prompt message is pushed to the user, and the ingredient outlet is controlled to stop filling the container with the ingredient. When the real-time liquid level height has not reached the preset height and a manual stop signal is obtained, and when the manual filling time reaches the preset time, an abnormal prompt message is pushed to the user, and the ingredient outlet is controlled to stop filling the container with the ingredient. When the real-time liquid level height has not reached the preset height and a manual stop signal is not obtained, the ingredient outlet is controlled to fill the container with the ingredient.

In some embodiments, as shown in FIG. 13, when a filling instruction is received, and the filling instruction is an automatic filling instruction, the initial liquid level height of the water tank is detected by the level sensor. When the initial liquid level height reaches the preset height, the ingredient outlet is also allowed to be controlled to fill the container with the ingredient. When an automatic stop signal is obtained, the ingredient outlet is controlled to stop filling the container with the ingredient. When an automatic stop signal is not obtained, the ingredient outlet is controlled to continue filling the container with the ingredient. When the initial liquid level height has not reached the preset height, the ingredient outlet is allowed to continue filling the container with the ingredient. During the process of filling the container with the ingredient, if the real-time liquid level height reaches the preset height, an abnormal prompt message is pushed to the user, and the ingredient outlet is controlled to stop filling the container with the ingredient. When the real-time liquid level height has not reached the preset height and an automatic stop signal is obtained, the ingredient outlet is controlled to stop filling the container with the ingredient. When the real-time liquid level height has not reached the preset height and an automatic stop signal is not obtained, the ingredient outlet is controlled to continue filling the container with the ingredient.

In some embodiments, as shown in FIG. 14, when a filling instruction is received, and the filling instruction is a manual filling instruction, the real-time liquid level height of the water tank is detected by the level sensor. When the initial liquid level height reaches the preset height, the ingredient outlet is also allowed to fill the container with the ingredient. When a manual stop signal is obtained, the ingredient outlet is controlled to stop filling the container with the ingredient. When a manual stop signal is not obtained, the ingredient outlet is controlled to continue filling the container with the ingredient. When the initial liquid level height has not reached the preset height, the ingredient outlet is also allowed to fill the container with the ingredient. During the process of filling the container with the ingredient, when the real-time liquid level height reaches the preset height, an abnormal prompt message is pushed to the user, and the ingredient outlet is controlled to stop filling the container with the ingredient. When the real-time liquid level height has not reached the preset height and a manual stop signal is obtained, and when the manual filling time reaches the preset time, an abnormal prompt message is pushed to the user, and the ingredient outlet is controlled to stop filling the container with the ingredient. When the real-time liquid level height has not reached the preset height and a manual stop signal is not obtained, the ingredient outlet is controlled to continue filling the container with the ingredient.

Based on the above various embodiments of the overflow prevention control method for the dispenser, specifically, to improve the user experience, this solution provides a full-water detection sensor on the water tank, and uses different overflow prevention control logics when fetching water according to whether the water tank is full.

When the water tank can detect whether it is full, there are three following methods for overflow prevention control.

### First overflow prevention control logic

When the water tank is not full, automatic water fetching provides overflow protection by stopping water supply when the liquid level does not change for 16 seconds, and manual water fetching provides overflow protection by stopping water supply when exceeding 1 minute.

When the water tank is detected to be full, a display control and a buzzer provide prompts, and simultaneously, the user's ice/water fetching operation is refused. However, this may lead to a poor user experience where the user cannot fetch water without cleaning the water tank.

### Second overflow prevention control logic

When the water tank is not full, automatic water fetching provides overflow protection by stopping water supply when the liquid level does not change for 16 seconds, and manual water fetching provides overflow protection by stopping water supply when exceeding 1 minute.

When the water tank itself is not full, but during the process of automatic or manual water fetching, a state change occurs from not full to full, water output is stopped.

When the water tank itself is already full, automatic water fetching provides overflow protection by stopping water supply when the liquid level does not change for 16 seconds, and manual water fetching provides overflow protection by stopping water supply when exceeding 1 minute.

### Third overflow prevention control logic

When the water tank is not full, automatic water fetching provides overflow protection by stopping water supply when the liquid level does not change for 16 seconds, and manual water fetching provides overflow protection by stopping water supply when exceeding 1 minute.

When the water tank itself is not full, but during the process of automatic or manual water fetching, a state change occurs from not full to full, water output is stopped.

When the water tank is full, the automatic water fetching method is refused, and manual water fetching provides overflow protection by stopping water supply when exceeding 1 minute.

Based on the above various embodiments of the overflow prevention control method for the dispenser, various embodiments of the controller, dispenser, computer-readable storage medium, and computer program product of the present disclosure are proposed below.

As shown in FIG. 17, FIG. 17 is a schematic diagram of a controller for executing an overflow prevention control method for a dispenser according to some embodiments of the present disclosure. A controller 1700 includes: a processor 1710, a memory 1720, and a computer program stored on the memory 1720 and executable on the processor 1710. FIG. 17 takes one processor 1710 and one memory 1720 as an example.

The processor 1710 and the memory 1720 may be connected via a bus or other means. FIG. 17 takes connection via a bus as an example.

The memory 1720, as a non-transitory computer-readable storage medium, may be configured to store non-transitory software programs and non-transitory computer-executable programs. Moreover, the memory 1720 may include high-speed random-access memory, and may also include non-transitory memory, such as at least one magnetic disk storage device, flash memory device, or other non-transitory solid-state storage device. In some implementations, the memory 1720 may include a memory 1720 remotely provided relative to the processor 1710. These remote memories 1720 may be connected to the controller 1700 via a network. Examples of the above network include, but are not limited to, the Internet, an intranet, a local area network, a mobile communication network, and combinations thereof.

Those skilled in the art can understand that the device structure shown in FIG. 17 does not constitute a limitation on the controller 1700, and may include more or fewer components than shown, or combine some components, or arrange components differently.

In the controller 1700 shown in FIG. 17, the processor 1710 may be configured to invoke an overflow prevention control program stored in the memory 1720, thereby implementing the above overflow prevention control method for a dispenser. Specifically, the non-transitory software programs and instructions required to implement the overflow prevention control method for a dispenser of the above embodiments are stored in the memory 1720, and when executed by the processor 1710, execute the overflow prevention control method for a dispenser of the above embodiments.

It is noteworthy that since the controller 1700 of the present disclosure can execute the overflow prevention control method for a dispenser of any of the above embodiments, the specific implementations and technical effects of the controller 1700 of the present disclosure may refer to the specific implementations and technical effects of the overflow prevention control method for a dispenser of any of the above embodiments.

Moreover, some embodiments of the present disclosure further provide a dispenser. The dispenser includes the controller in the above embodiments.

It is noteworthy that since the dispenser of the present disclosure includes the controller in the above embodiments, and the controller can execute the overflow prevention control method for a dispenser of any of the above embodiments, the specific implementations and technical effects of the dispenser of the present disclosure may refer to the specific implementations and technical effects of the overflow prevention control method for a dispenser of any of the above embodiments.

Moreover, some embodiments of the present disclosure further provide a computer-readable storage medium. The computer-readable storage medium stores computer-executable instructions. The computer-executable instructions are for executing the above overflow prevention control method for a dispenser. Exemplarily, the method operations in FIGS. 2 to 16 described above can be executed.

It is noteworthy that since the computer-readable storage medium of the present disclosure can execute the overflow prevention control method for a dispenser of any of the above embodiments, the specific implementations and technical effects of the computer-readable storage medium of the present disclosure may refer to the specific implementations and technical effects of the overflow prevention control method for a dispenser of any of the above embodiments.

Moreover, some embodiments of the present disclosure further provide a computer program product, including a computer program or computer instructions. The computer program or the computer instructions are stored in a computer-readable storage medium. A processor of a computer device can read the computer program or the computer instructions from the computer-readable storage medium. The processor can execute the computer program or the computer instructions, causing the computer device to execute the above overflow prevention control method for a dispenser. Exemplarily, the method operations in FIGS. 2 to 16 described above can be executed.

It is noteworthy that since the computer program product of the present disclosure can execute the overflow prevention control method for a dispenser of any of the above embodiments, the specific implementations and technical effects of the computer program product of the present disclosure may refer to the specific implementations and technical effects of the overflow prevention control method for a dispenser of any of the above embodiments.

Those skilled in the art can understand that all or some of the operations in the methods disclosed above and the systems may be implemented as software, firmware, hardware, and appropriate combinations thereof. Some physical components or all physical components may be implemented as software executed by a processor, such as a central processing unit, a digital signal processor, or a microprocessor, or as hardware, or as an integrated circuit, such as an application-specific integrated circuit. Such software may be distributed on computer-readable media. Computer-readable media may include computer storage media (or non-transitory media) and communication media (or transitory media). As is well known to those skilled in the art, the term computer storage media includes volatile and non-volatile, removable and non-removable media implemented in any method or technology for storing information, such as computer-readable instructions, data structures, program modules, or other data. Computer storage media include, but are not limited to, RAM, ROM, EEPROM, flash memory or other memory technology, CD-ROM, digital versatile disc (DVD) or other optical disc storage, magnetic cassettes, magnetic tape, magnetic disk storage or other magnetic storage devices, or any other medium that can be used to store desired information and can be accessed by a computer. Moreover, as is well known to those of ordinary skill in the art, communication media typically include computer-readable instructions, data structures, program modules, or other data in a modulated data signal such as a carrier wave or other transport mechanism, and may include any information delivery medium.

It should be understood that in the present disclosure, "at least one (item)" means one or more, and "a plurality" means two or more. "And/or" is intended to describe the association relationship of associated objects, indicating that three relationships may exist. For example, "A and/or B" may indicate: only A exists, only B exists, and both A and B exist, where A and B may be singular or plural. The character "/" generally indicates that the associated objects are in an "or" relationship. "At least one of the following" or similar expressions refers to any combination of these items, including a single item or a combination of plural items. For example, at least one of a, b, and c may represent: "a", "b", "c", "a and b", "a and c", "b and c", or "a and b and c"; where a, b, c may be single or multiple.

In the several embodiments provided in the present disclosure, it should be understood that the disclosed system, device, and method may be implemented in other ways. For example, the device embodiments described above are merely illustrative. For example, the division of units is only a logical function division. In actual implementation, there may be other division methods. For example, multiple units or components may be combined or integrated into another system, or some features may be omitted or not executed. In addition, the mutual coupling or direct coupling or communication connection shown or discussed may be indirect coupling or communication connection through some interfaces, devices, or units, and may be in electrical, mechanical, or other forms. The units described as separate components may or may not be physically separate. The components displayed as units may or may not be physical units, that is, they may be located in one place, or may be distributed to multiple network units. Some or all of the units may be selected according to actual needs to achieve the purpose of the solutions of the embodiments.

It should further be understood that the various implementation methods provided by the embodiments of the present disclosure may be arbitrarily combined to achieve different technical effects.

The above is a detailed description of some embodiments of the present disclosure, but the present disclosure is not limited to the above-described embodiments. Those skilled in the art may make various equivalent modifications or substitutions without departing from the spirit of the present disclosure. These equivalent modifications or substitutions are all included in the scope defined by the claims of the present disclosure.

## Claims

1. An overflow prevention control method for a dispenser, wherein:
the dispenser is provided with an ingredient outlet and a water tank, wherein an upper part of the water tank is configured to place a container, the ingredient outlet is configured to fill the container with an ingredient, and the water tank is configured to receive the ingredient overflowing from the container and is provided with a level sensor; and
the method comprises:
detecting, via the level sensor, a first liquid level height of the water tank; and
enabling a target filling mode and a target overflow protection according to the first liquid level height, wherein the target filling mode is at least one of an automatic filling mode or a manual filling mode, and the target overflow protection is at least one of an automatic filling overflow protection or a manual filling overflow protection.

2. The method according to claim 1, wherein the enabling a target filling mode and a target overflow protection according to the first liquid level height comprises:
in a case where the first liquid level height of the water tank is less than a preset height, enabling the automatic filling mode and the manual filling mode, and enabling the automatic filling overflow protection and the manual filling overflow protection; and
in a case where the first liquid level height of the water tank is greater than or equal to the preset height, disabling the automatic filling mode and the manual filling mode.

3. The method according to claim 1, wherein the enabling a target filling mode and a target overflow protection according to the first liquid level height comprises:
in a case where the first liquid level height of the water tank is less than a preset height, enabling the automatic filling mode and the manual filling mode, and enabling the automatic filling overflow protection and the manual filling overflow protection; and
in a case where the first liquid level height of the water tank is greater than or equal to the preset height, enabling the automatic filling mode and the manual filling mode, and enabling the automatic filling overflow protection and the manual filling overflow protection.

4. The method according to claim 1, wherein the enabling a target filling mode and a target overflow protection according to the first liquid level height comprises:
in a case where the first liquid level height of the water tank is less than a preset height, enabling the automatic filling mode and the manual filling mode, and enabling the automatic filling overflow protection and the manual filling overflow protection; and
in a case where the first liquid level height of the water tank is greater than or equal to the preset height, enabling the manual filling mode and disabling the automatic filling mode, and enabling the manual filling overflow protection.

5. The method according to claim 3 or 4, wherein in a case that the first liquid level height of the water tank is less than the preset height, the method further comprises:
receiving a filling instruction, and controlling, according to the filling instruction, the ingredient outlet to fill the container with the ingredient;
detecting, via the level sensor, a real-time liquid level height of the water tank; and
in a case where the real-time liquid level height reaches the preset height, controlling the ingredient outlet to stop filling the container with the ingredient.

6. The method according to any one of claims 1 to 5, wherein the dispenser is provided with an automatic filling sensor, and the dispenser is configured to execute the automatic filling mode by operations as follows:
in a case where the automatic filling sensor detects that the container is placed below the ingredient outlet, responsively generating an automatic filling instruction; and
controlling, via the automatic filling instruction, the ingredient outlet to fill the container with the ingredient.

7. The method according to any one of claims 1 to 6, wherein the dispenser is provided with a manual filling trigger device, and the dispenser is configured to execute the manual filling mode by operations as follows:
receiving, via the manual filling trigger device, a manual filling instruction triggered by a user; and
controlling, according to the manual filling instruction, the ingredient outlet to fill the container with the ingredient.

8. The method according to claim 6 or 7, wherein in a case of controlling, via the automatic filling instruction, the ingredient outlet to fill the container with the ingredient, operations of the automatic filling overflow protection comprise at least one of the following:
detecting, by the automatic filling sensor, a second liquid level height in the container, and in a case where the second liquid level height reaches a preset filling height, controlling the ingredient outlet to stop filling the container with the ingredient;
in a case where the automatic filling sensor detects that the container is not placed below the ingredient outlet, controlling the ingredient outlet to stop filling the container with the ingredient; and
detecting, via the automatic filling sensor, the second liquid level height in the container; and in a case where the second liquid level height remains unchanged within a preset time period, controlling the ingredient outlet to stop filling the container with the ingredient.

9. The method according to claim 8, wherein in a case of controlling, via the automatic filling instruction, the ingredient outlet to fill the container with the ingredient, the method further comprises at least one of the following:
in a case where the first liquid level height of the water tank is greater than or equal to the preset height, pushing an abnormal prompt message to the user;
in a case where it is detected that the container is not placed below the ingredient outlet, pushing an abnormal prompt message to the user; and
in a case where the second liquid level height in the container remains unchanged within the preset time period, pushing an abnormal prompt message to the user.

10. The method according to any one of claims 7 to 9, wherein in a case of controlling, according to the manual filling instruction, the ingredient outlet to fill the container with the ingredient, operations of the manual filling overflow protection comprise at least one of the following:
receiving a user stop signal, and controlling, according to the user stop signal, the ingredient outlet to stop filling the container with the ingredient; and
acquiring a manual filling time, and in a case where the manual filling time reaches a preset time, controlling the ingredient outlet to stop filling the container with the ingredient.

11. The method according to claim 10, wherein in a case of controlling, according to the manual filling instruction, the ingredient outlet to fill the container with the ingredient, the method further comprises at least one of the following:
in a case where the first liquid level height of the water tank is greater than or equal to the preset height, pushing an abnormal prompt message to the user; and
in a case where the manual filling time reaches the preset time, pushing an abnormal prompt message to the user.

12. A controller, comprising a memory, a processor, and a computer program stored on the memory and executable on the processor, wherein the processor, when running the computer program, executes the overflow prevention control method for a dispenser according to any one of claims 1 to 11.

13. A dispenser, comprising the controller according to claim 12.

14. A computer-readable storage medium, having computer-executable instructions stored thereon, wherein the computer-executable instructions are configured to execute the overflow prevention control method for a dispenser according to any one of claims 1 to 11.

15. A computer program product, comprising a computer program or computer instructions, wherein the computer program or the computer instructions are stored in a computer-readable storage medium and a processor of a computer device is capable of reading the computer program or the computer instructions from the computer-readable storage medium, and executing the computer program or the computer instructions, causing the computer device to execute the overflow prevention control method for a dispenser according to any one of claims 1 to 11.
